# EUROPEAN PATENT SPECIFICATION

(11) **EP 1 419 992 B1**
(45) Date of publication and mention of the grant of the patent: **03.01.2007**
(21) Application number: 03292833.5
(22) Date of filing: 14.11.2003
(51) Int. Cl.: C01B 3/38, B01J 8/06

(54) **Synthetic gas manufacturing plant and synthetic gas manufacturing method**
Anlage und Verfahren zur Herstellung von Synthesegas
Installation et procédé pour la préparation de gaz de synthèse

(30) Priority: 15.11.2002 JP 2002332719
(43) Date of publication of application: 19.05.2004
(73) Proprietor: MITSUBISHI HEAVY INDUSTRIES, LTD., Tokyo (JP)
(72) Inventor: Iijima, Masaki, MInato-Ku Tokyo (JP); Kobayashi, Kazuto Hiroshima Research & Dev. Ctr., 4-chome Nishi-ku Hiroshima Hiroshima-ken (JP); Osora, Hiroyuki Hiroshima Research & Dev. Ctr., 4-chome Nishi-ku Hiroshima Hiroshima-ken (JP); Seiki, Yoshio Hiroshima Research & Dev. Ctr., 4-chome Nishi-ku Hiroshima Hiroshima-ken (JP)
(74) Representative: Intes, Didier Gérard André

(56) References cited:
- EP-A- 0 945 162
- EP-A- 1 008 577
- EP-A- 1 182 185

## Description

The present invention relates to a synthetic gas manufacturing plant and a synthetic gas manufacturing method used in, e.g., synthesis of methanol, synthesis of dimethylether, or synthesis of gasoline, kerosene, and light oil in a Fischer-Tropsch reaction system.

More specifically, the present invention relates to an energy-saving synthetic gas manufacturing plant and method which use carbon dioxide produced in the system as the material of a synthetic gas, which contributes to the prevention of global warming by discharging no residue to the atmosphere even if a residue is produced, and which can effectively use heat generated in the system.

A synthetic gas mainly containing hydrogen (H₂) and carbon monoxide (CO) is used in, e.g., synthesis of methanol, dimethylether (DME), or gasoline in the GTL (Gas To Liquid) process in a Fischer-Tropsch reaction system.

Jpn. Pat. Appln. KOKAI Publication No. 2001-97905 discloses a method of manufacturing a synthetic gas by supplying a natural gas and carbon dioxide recovered from a combustion exhaust gas from a reformer to a moistening device, adding steam to this moistening device to prepare a source gas containing the steam-added gas mixture, and supplying this source gas to the reformer to cause a reforming reaction.

This synthetic gas manufacturing method recovers part of carbon dioxide from the combustion exhaust gas produced in the reformer, and uses the recovered carbon dioxide as the source gas of a synthetic gas. This increases the production of the synthetic gas, and also reduces the amount of carbon dioxide discharged from a chimney to the atmosphere, thereby contributing to the prevention of global warming.

EP1182185 discloses a plant and a method for the manufacturing of synthesis gas, which is converted to methanol. The plant comprises - for the synthesizing gas forming step - a reformer with a reaction tube for the steam reforming of natural gas and a combustion radiation unit for heating the reaction tube. The combustion waste gas containing carbon dioxide generated in the combustion radiation section flows through the convection section where it exchanges heat with the natural gas having steam added thereto and with boiler water. Carbon dioxide contained in the cooled combustion waste gas is recovered in a carbon dioxide recovery device. After being compressed, the recovered carbon dioxide is recycled and added to the natural gas. Steam is added to the natural gas/carbon dioxide-mixture and subsequently supplied to the reaction tube of the reformer. It is possible to utilize thereto the steam generated by the heat exchange between the boiler water and the synthetic gas from the reformer and by the heat exchange in the convection section between the boiler water and the combustion waste gas.

Recently, as one measure to counter the global warming phenomenon, it is being strongly desired to minimize the amount of that carbon dioxide discharged to the atmosphere, which is produced when fossil fuel or the like is combusted.

Unfortunately, in the conventional synthetic gas manufacturing method, a considerable amount of combustion exhaust gas containing carbon dioxide produced in the reformer is discharged from a chimney to the atmosphere.

It is an object of the present invention to provide a synthetic gas manufacturing plant and synthetic gas manufacturing method, which greatly contribute to preservation of the global environment by discharging no carbon dioxide to the atmosphere.

It is another object of the present invention to provide an energy-saving synthetic gas manufacturing plant and synthetic gas manufacturing method by which heat generated in the system is effectively used in the system, thereby minimizing the amount of heat discharged outside the system.

According to an aspect of the present invention, there is provided a synthetic gas manufacturing plant comprising:
a reformer having a reaction tube, a combustion radiation unit arranged around the reaction tube to heat the reaction tube, and a convection unit communicating with the combustion radiation unit;
a source gas supply passageway to supply a natural gas to the reformer;
a steam supply passageway to supply steam to the source gas supply passageway;
a carbon dioxide recovery apparatus to which a total amount of combustion exhaust gas flowing through the convection unit of the reformer is supplied, and which recovers carbon dioxide from the combustion exhaust gas;
a compressor to compress the recovered carbon dioxide; and
a return passageway to supply part or the whole of the compressed carbon dioxide from the compressor to the source gas supply passageway,
characterized in that the compressor is driven by a steam turbine powered by steam, which is generated by a first heat exchanger able to generate steam by exchanging heat between a synthetic gas synthesized by the reformer and water and/or by a second heat exchanger able to generate steam by exchanging heat with water in the convection unit of the reformer.

According to another aspect of the present invention, there is provided a synthetic gas manufacturing method comprising steps of:
providing a synthetic gas manufacturing plant which comprises
   (a) a reformer having a reaction tube, a combustion radiation unit arranged around the reaction tube to heat the reaction tube, and a convection unit communicating with the combustion radiation unit,
   (b) a source gas supply passageway to supply a natural gas to the reformer,
   (c) a steam supply passageway to supply steam to the source gas supply passageway,
   (d) a carbon dioxide recovery apparatus to which a total amount of combustion exhaust gas flowing through the convection unit of the reformer is supplied, and which recovers carbon dioxide from the combustion exhaust gas,
   (e) a compressor to compress the recovered carbon dioxide, and
   (f) a return passageway to supply part or the whole of the compressed carbon dioxide from the compressor to the source gas supply passageway;
recovering, by the carbon dioxide recovery
   apparatus, carbon dioxide in the total amount of combustion exhaust gas which is exhausted from the combustion radiation unit of the reformer, and flows in the convection unit;
compressing the carbon dioxide recovered by the carbon dioxide recovery apparatus by the compressor; and
supplying part or the whole of the compressed carbon dioxide to the source gas supply passageway through the return passageway, and supplying steam to the source gas supply passageway through the steam supply passageway, thereby supplying a gas mixture of the natural gas, compressed carbon dioxide, and steam, as a source gas, to the reaction tube externally heated by the combustion radiation unit of the reformer,
characterized in that the method further comprises the step of providing a steam turbine powered by steam for driving the compressor, which is generated by exchanging heat between a synthetic gas synthesized by the reformer and water and/or by exchanging heat with water in the convection unit of the reformer.

The invention can be more fully understood from the following detailed description when taken in conjunction with the accompanying drawings, in which:
FIG. 1 is a schematic view showing the main parts of synthetic gas manufacture used in an embodiment of the present invention;
FIG. 2 is a schematic view showing a carbon dioxide recovery apparatus incorporated into FIG. 1; and
FIG. 3 is a schematic view showing the major parts of synthetic gas manufacture used in another embodiment of the present invention.

A synthetic gas manufacturing plant and a synthetic gas manufacturing method according to the present invention will be described in detail below with reference to the accompanying drawing.

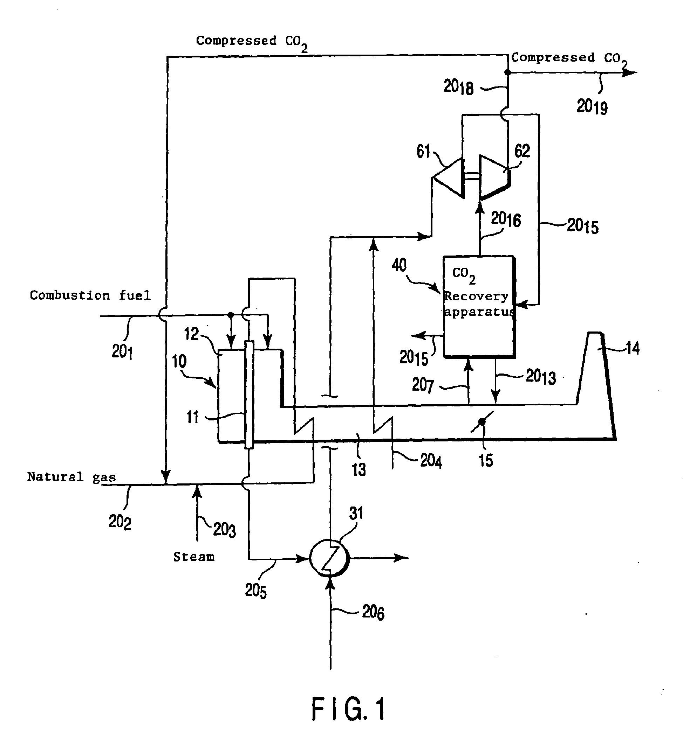

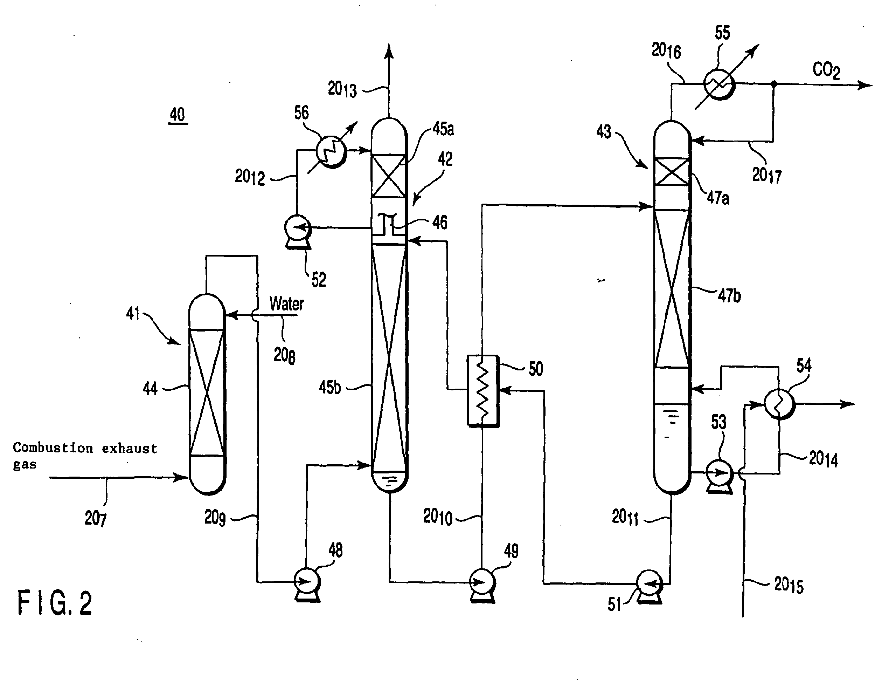

FIG. 1 is a schematic view showing a synthetic gas manufacturing plant according to this embodiment. FIG. 2 is a schematic view showing a carbon dioxide recovery apparatus incorporated into the synthetic gas manufacturing plant shown in FIG. 1.

A reformer 10 includes a steam reforming reaction tube 11, a combustion radiation unit 12 formed around the reaction tube 11, and a convection unit (waste heat recovering unit) 13 connected to the combustion radiation unit 12. The reformer 10 communicates with a chimney 14. In the convection unit 13, a flow path area varying means (e.g., a damper 15) is placed downstream of the diverging point of a combustion exhaust gas supply passageway (to be described later). The reaction tube 11 is filled with a catalyst (e.g., a nickel-based catalyst) for forming a synthetic gas.

A fuel supply passageway 20₁ is connected to the combustion radiation unit 12 of the reformer 10. A source gas supply passageway 20₂ is connected to the upper end of the reaction tube 11 via the convection unit 13 of the reformer 10. A desulfurization unit (not shown) can also be inserted into the passageway 20₂. A steam supply passageway 20₃ is connected to the upstream side before the intersection of the source gas supply passageway 20₂ and the convection unit 13. A passageway 20₄ in which a fluid to be heated, e.g., boiler water flows intersects the convection unit 13 of the reformer 10. Heat is exchanged between the combustion exhaust gas in the convection unit 13 and the boiler water, so the combustion exhaust gas is cooled, and the boiler water is heated to produce steam. This steam is supplied to a steam turbine (to be described later). By changing the pressure of the boiler water or the heat exchange conduction area, medium-pressure steam or high-pressure steam can be supplied in accordance with the needs on the steam turbine side. To use part of this steam in the synthesis of a synthetic gas, the steam may also be supplied to the source gas supply passageway 20₂ through the steam supply passageway 20₃.

A synthetic gas passageway 20₅ is connected to the lower end of the reaction tube 11 of the reformer 10. A heat exchanger 31 is inserted into the synthetic gas passageway 20₅, and a passageway 20₆ intersects the heat exchanger 31. The heat exchanger 31 heats a fluid to be heated, e.g., boiler water flowing in the passageway 20₆, thereby producing steam. This steam is supplied to the steam turbine (to be described later). By changing the boiler water pressure or the heat exchange conduction area, medium-pressure steam or high-pressure steam can be supplied in accordance with the needs on the steam turbine side.

A carbon dioxide recovery apparatus 40 is connected to the convection unit 13 of the reformer 10 through a combustion exhaust gas supply passageway 20₇, and the total amount of combustion exhaust gas flowing in the convection unit 13 is supplied. As shown in FIG. 2, the carbon dioxide recovery apparatus 40 includes a cooling tower 41, carbon dioxide absorption tower 42, and absorbing solution regeneration tower 43 arranged adjacent to each other. The cooling tower 41 incorporates a gas-liquid contacting member 44. The carbon dioxide absorption tower 42 incorporates gas-liquid contacting members 45a and 45b. The gas-liquid contacting member 45a efficiently brings combustion exhaust gas containing carbon dioxide into contact with an absorbing solution for removing carbon dioxide from the combustion exhaust gas by absorption. The gas-liquid contacting member 45a is placed above an overflow portion 46 of the regenerated absorbing solution. The gas-liquid contacting member 45b having the same function is placed below the overflow portion 46. The absorbing solution regeneration tower 43 incorporates two, upper and lower gas-liquid contacting members 47a and 47b.

The cooling tower 41 is connected to the convection unit 13 through the combustion exhaust gas supply passageway 20₇. When the convection unit 13 is totally closed downstream of the diverging point of the combustion exhaust gas supply passageway 20₇ by the damper 15 formed in the convection unit 13, the total amount of the combustion exhaust gas is supplied to the carbon dioxide recovery apparatus 40. By adjusting the opening of the damper 15, the combustion exhaust gas may also be entirely or partially discharged outside the system from the chimney 14, without being supplied to the carbon dioxide recovery apparatus 40, in accordance with the maintenance or failure of the carbon dioxide recovery apparatus 40, or some other situation.

Cooling water is sprayed from the upper portion of the cooling tower 41 through a passageway 20₈, and efficiently brought into contact with a combustion exhaust gas supplied through the combustion exhaust gas supply passageway 20₇ by the gas-liquid contacting member 44, thereby cooling the combustion exhaust gas. The top of the cooling tower 41 is connected to a portion near the bottom of the carbon dioxide absorption tower 42 through a passageway 20₉. A blower 48 is inserted into the passageway 20₉.

The bottom of the absorption tower 42 is connected through a passageway 20₁₀ to a position between the two, upper and lower gas-liquid contacting members 47a and 47b of the absorbing solution regeneration tower 43. A pump 49 and heat exchanger 50 are inserted into the passageway 20₁₀ in this order from the side of the absorption tower 42.

The bottom of the absorbing solution regeneration tower 43 is connected to the upper portion of the absorption tower 42 where the overflow portion 46 exists, through a passageway 20₁₁ into which the heat exchanger 50 is inserted. A pump 51 is inserted into the passageway 20₁₁ between the bottom of the absorbing solution regeneration tower 43 and the heat exchanger 50. One end of a passageway 20₁₂ is connected to the overflow portion 46 of the absorption tower 42, and the other end of the passageway 20₁₂ is connected to a position above the upper gas-liquid contacting member 45a of the absorption tower 42 via a pump 52. A heat exchanger 56 is inserted into the passageway 20₁₂. One end of an exhaust passageway 20₁₃ is connected to the top of the absorption tower 42, and the other end of the exhaust passageway 20₁₃ is connected to the convection unit 13 of the reformer 10.

One end of a passageway 20₁₄ is connected to a portion near the bottom of the absorbing solution regeneration tower 43, and the other end of the passageway 20₁₄ is connected to a portion immediately below the gas-liquid contacting member 47b of the absorbing solution regeneration tower 43. A pump 53 and heat exchanger 54 are inserted into the passageway 20₁₄ in this order from the portion near the bottom of the absorbing solution regeneration tower 43. A passageway 20₁₅ in which low-pressure steam from the steam turbine (to be described later) flows intersects the heat exchanger 54. Accordingly, this low-pressure steam exchanges heat with a regenerated solution flowing through the passageway 20₁₄ and condenses. One end of a passageway 20₁₆ is connected to the top of the regeneration tower 43, and the other end of the passageway 20₁₆ is connected to a compressor (to be described later) via a cooling heat exchanger 55. A passageway 20₁₇ connected to a portion above the upper vapor-liquid contacting member 47a in the regeneration tower 43 branches from the passageway 20₁₆ on the downstream side of the cooling heat exchanger 55.

A compressor 62 driven by a steam turbine 61 is connected to the carbon dioxide recovery apparatus 40 through the passageway 20₁₆. The compressor 62 is connected to the source gas supply passageway 20₂ on the upstream side of the reformer 10 via a return passageway 20₁₈. A passageway 20₁₉ for discharging compressed carbon dioxide outside the system branches from the return passageway 20₁₈.

The passageways 20₄ and 20₆ in which the steam flows are connected to the steam turbine 61. The steam turbine 61 is connected to the low-pressure steam passageway 20₁₅ intersecting the heat exchanger 54 of the carbon dioxide recovery apparatus 40.

The synthetic gas manufacturing method of the present invention will be described below with reference to the synthetic gas manufacturing plant shown in FIGS. 1 and 2.

First, combustion fuel is supplied to the combustion radiation unit 12 of the reformer 10 through the fuel supply passageway 20₁. In the combustion radiation unit 12, the combustion fuel is combusted together with air to heat the reaction tube 11 to a predetermined temperature. The combustion exhaust gas produced in the combustion radiation unit 12 to heat the reaction tube 11 to a predetermined temperature flows into the convection unit 13. Since the source gas supply passageway 20₂ intersects the convection unit 13, a source gas flowing through the source gas supply passageway 20₂ is preheated, and at the same time the combustion exhaust gas is cooled. Also, since the passageway 20₄ intersects the convection unit 13, heat is exchanged between the combustion exhaust gas and boiler water flowing through the passageway 20₄. Consequently, the boiler water turns into medium-pressure or high-pressure steam, and at the same time the combustion exhaust gas is cooled.

When the convection unit 13 and the chimney 14 are separated by the damper 15, the combustion exhaust gas whose heat is partially recovered by the boiler water and the like is entirely supplied to the cooling tower 41 of the carbon dioxide recovery apparatus 40 through the combustion exhaust gas supply passageway 20₇. In the cooling tower 41, the gas-liquid contacting member 44 efficiently cools the supplied combustion exhaust gas by gas-liquid contact with cooling water which is supplied through the passageway 20₈ and sprayed. The cooled combustion exhaust gas is supplied from the top of the cooling tower 41 to a portion near the bottom of the carbon dioxide absorption tower 42 through the passageway 20₉ by the blower 48. While the combustion exhaust gas rises in the lower gas-liquid contacting member 45b in the carbon dioxide absorption tower 42, the combustion exhaust gas comes in contact with a regenerated absorbing solution, for example a regenerated amine solution, supplied from the absorbing solution regeneration tower 43 to the upper portion of the gas-liquid contacting portion of the absorption tower 42 through the passageway 20₁₁ via the heat exchanger 50. As a consequence, carbon dioxide in the combustion exhaust gas is absorbed by the regenerated amine solution. The combustion exhaust gas further passes through the overflow portion 46 and the upper gas-liquid contact member 45a. During this process, the combustion exhaust gas comes into contact with the regenerated amine solution, which is supplied to the portion near the top of the absorption tower 42 through the passageway 20₁₂ with the help of the function of the pump 52. As a result, CO₂ of the combustion exhaust gas remaining unabsorbed is absorbed. At this time, the combustion exhaust gas heated by carbon dioxide gas absorption is cooled by the regenerated amine solution, which is cooled by heat exchanger 56 inserted the passageway 20₁₂.

This combustion exhaust gas from which carbon dioxide is removed is supplied to the chimney 14 through the exhaust passageway 20₁₃ and discharged outside. A carbon dioxide absorbing solution, for example a carbon dioxide absorbing amine solution, is stored in the bottom of the absorption tower 42, and supplied to a portion between the two gas-liquid contacting members 47a and 47b of the absorbing solution regeneration tower 43 through the passageway 20₁₀ by the pump 49. While the carbon dioxide absorbing amine solution flows through the heat exchanger 50 inserted into the passageway 20₁₀, heat is exchanged between this amine solution and a regenerated amine solution at a relatively high temperature flowing through the passageway 20₁₁ connected to the bottom of the regeneration tower 43. Consequently, the carbon dioxide absorbing amine solution is heated, and the regenerated amine solution is cooled. The heated carbon dioxide absorbing amine solution is separated into carbon dioxide and a regenerated amine solution, as it flows down in the lower gas-liquid contacting member 47b in the regeneration tower 43. The regenerated amine solution stored in the bottom of the regeneration tower 43 is circulated through the passageway 20₁₄ by the pump 53, and heated by heat exchange by the heat exchanger 54 intersected by the passageway 20₁₅ in which low-pressure steam exhausted from the steam turbine (to be described later) flows. Consequently, the regeneration tower 43 itself is heated and used as the heat source of separation between carbon dioxide and a regenerated amine solution.

The regenerated amine solution is stored in the bottom of the regeneration tower 43, and returned to the absorption tower 42 through the passageway 20₁₁ by the pump 51. The carbon dioxide rises in the upper gas-liquid contacting member 47a and is discharged from the top of the regeneration tower 43 through the passageway 20₁₆. During the process, the carbon dioxide is cooled in the cooling heat exchanger 55, and the steam and amine steam carried together with this carbon dioxide are condensed. The condensed water is returned to the regeneration tower 43 through the branched passageway 20₁₇.

After carbon dioxide in the combustion exhaust gas is recovered by the carbon dioxide recovery apparatus 40, this carbon dioxide is supplied to the compressor 62 through the passageway 20₁₆. Steam generated by heat exchange at the intersection with the convection unit 13 of the reformer 10 and steam generated by heat exchange by the heat exchanger 31 (to be described later) are supplied to the steam turbine 61 through the passageways 20₄ and 20₆ and drive the steam turbine 61. The steam turbine 61 drives the compressor 62, and carbon dioxide supplied to the compressor 62 is compressed. When steam is generated by exchanging heat with the combustion exhaust gas, medium-pressure steam or high-pressure steam can be supplied in accordance with the needs on the steam turbine side, by changing the boiler water flow rate, heat exchange conduction area, or the like.

A portion of the compressed carbon dioxide can be supplied through the return passageway 20₁₈ to the passageway 20₂ in which a natural gas flows, and used as the raw material of a synthetic gas. The remaining compressed carbon dioxide can be discharged outside the system (e.g., to a urea plant or into the ground) through the return passageway 20₁₈ and passageway 20₁₉.

The low-pressure steam exhausted from the steam turbine 61 is supplied to the carbon dioxide recovery apparatus 40 through the passageway 20₁₅. The heat exchanger 54 performs heat exchange between this low-pressure steam and the regenerated amine solution circulated through the passageway 20₁₄. As a consequence, the regenerated amine solution is heated, and the low-pressure steam is cooled into condensed water. This condensed water is returned as the boiler water described above to the passageways 20₄ and 20₆ through the passageway 20₁₅.

A natural gas mainly containing methane is supplied to the source gas supply passageway 20₂. A predetermined amount of carbon dioxide compressed by the compressor 62 is added through the return passageway 20₁₈ to the natural gas which flows in the source gas supply passageway 20₂. Also, a predetermined amount of steam is added to the natural gas through the steam supply passageway 20₃. This steam can be generated by exchanging heat between boiler water and a synthetic gas in the heat exchanger 34, or generated by exchanging heat between boiler water and a combustion exhaust gas in the convection unit 13 of the reformer 10.

The natural gas to which the carbon dioxide and steam are added flows in the source gas supply passageway 20₂, and is heated while passing through the convection unit 13 of the reformer 10. The heated natural gas is supplied to the reaction tube 11. Of the natural gas mainly containing methane (CH₄), the steam, and the carbon dioxide supplied to the reaction tube 11 of the reformer 10, primarily methane is subjected to steam reforming in the presence of a catalyst in the reaction tube 11, thereby manufacturing a synthetic gas containing hydrogen, carbon monoxide, and carbon dioxide. This reforming reaction is an endothermic reaction. As described previously, therefore, a fuel gas and air are combusted in the combustion radiation unit 12 of the reformer 10 to heat the reaction tube 11 to, e.g., 850 to 900°C. The obtained synthetic gas is supplied to the heat exchanger 31 through the synthetic gas passageway 20₅. This synthetic gas heats the boiler water flowing through the passageway 20₆ to generate steam, and the synthetic gas itself is cooled. The steam is supplied to the steam turbine 61 and drives it.

In the embodiment of the present invention as described above, when a synthetic gas containing hydrogen and carbon monoxide is to be manufactured by the reforming step of supplying a source gas containing a natural gas and steam to the reformer 10, carbon dioxide contained in the total amount of combustion exhaust gas produced in the reformer 10 is recovered by the carbon dioxide recovery apparatus 40. This carbon dioxide is supplied to the compressor 62 and compressed by driving the compressor 62 by using a heat source generated in the reforming step. More specifically, steam generated by heat exchange at the intersection with the convection unit 13 of the reformer 10 and steam generated by heat exchange in the heat exchanger 31 are supplied to the steam turbine 61 through the passageways 20₄ and 20₆ and drive the steam turbine 61. By driving the compressor 62 by the driving force of the steam turbine 61, carbon dioxide can be compressed by excess steam generated in the reforming step.

A portion of this compressed carbon dioxide is supplied to the natural gas and steam, and a source gas containing this compressed carbon dioxide is supplied to the reaction tube 11 of the reformer 10 to cause a reforming reaction, thereby increasing the production of the synthetic gas. Also, in accordance with a failure of the carbon dioxide recovery apparatus 40 or some other situation, the combustion exhaust gas can be entirely or partially discharged outside the system from the chimney 14, without being supplied to the carbon dioxide recovery apparatus 40, by adjusting the opening of the damper 15.

On the other hand, if the amount of compressed carbon dioxide is excessive compared to the amounts of natural gas and steam, the compressed carbon dioxide can be effectively used in installations outside the system. Furthermore, this compressed carbon dioxide may also be discharged to and fixed in the ground such as an oil field.

Accordingly, the production of the synthetic gas can be increased. In addition, the excess heat source in the reforming step can be effectively used, e.g., steam can be generated by this excess heat and supplied to the steam turbine. Also, the amount of carbon dioxide discharged from the chimney can be reduced to substantially zero. This makes it possible to improve the economical efficiency by reducing the carbon dioxide discharge tax, and contribute to the prevention of global warming.

The obtained synthetic gas can be used in synthesis of gasoline or the like in a Fischer-Tropsch reaction system, synthesis of methanol, or synthesis of dimethylether. If the synthetic gas is to be applied to synthesis of gasoline or the like in a Fischer-Tropsch reaction system, the synthetic gas preferably has a composition in which the molar ratio of H₂/CO is 1 to 2.0.

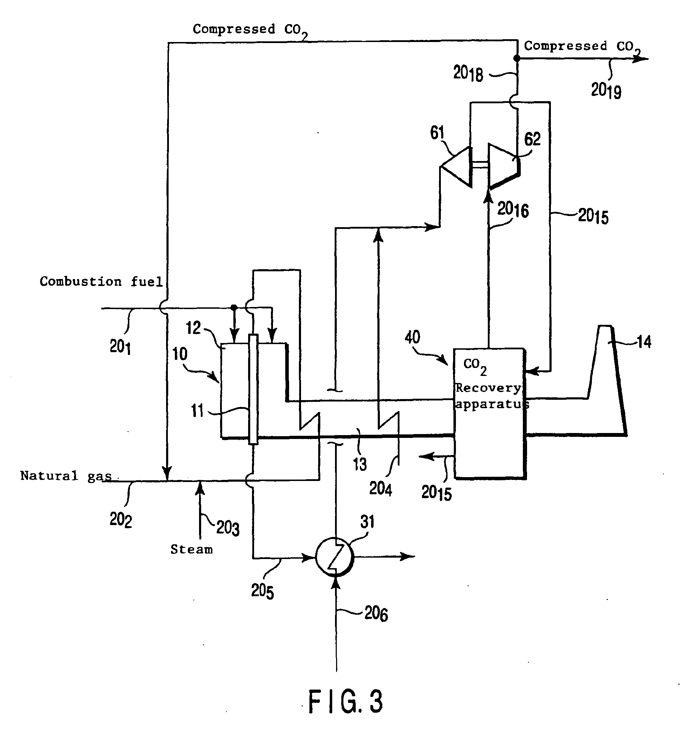

In the above embodiment, as shown in FIG. 1, a combustion exhaust gas is supplied from the convection unit 13 to the carbon dioxide recovery apparatus 40 through the passageway 20₇. However, as shown in FIG. 3, this combustion exhaust gas may also be directly supplied from the convection unit 13 to the carbon dioxide recovery apparatus 40 (the cooling tower 41 shown in FIG. 2), so that the total amount of combustion exhaust gas is always processed.

## Claims

1. A synthetic gas manufacturing plant comprising :
a reformer (10) having a reaction tube (11), a combustion radiation unit (12) arranged around the reaction tube (11) to heat the reaction tube (11), and a convection unit (13) communicating with the combustion radiation unit (12);
a source gas supply passageway (20₂) to supply a natural gas to the reformer;
a steam supply passageway (20₃) to supply steam to the source gas supply passageway (20₂);
a carbon dioxide recovery apparatus (40) to which a total amount of combustion exhaust gas flowing thorugh the convection unit (13) of the reformer (10) is supplied, and which recovers carbon dioxide from the combustion exhaust gas;
a compressor (62) to compress the recovered carbon dioxide ; and
a return passageway (20₁₈) to supply part or the whole of the compressed carbon dioxide from the compressor (62) to the source gas supply passageway (20₂),
**characterized in that** the compressor is driven by a steam turbine powered by steam, which is generated by a first heat exchanger able to generate steam by exchanging heat between a synthetic gas synthesized by the reformer and water and/or by a second heat exchanger able to generate steam by exchanging heat with water in the convection unit of the reformer.

2. A plant according to claim 1, **characterized in that** passageway area varying means is placed in the convection unit, and supplies the total amount of combustion exhaust gas flowing in the convection unit to the carbon dioxide recovery apparatus.

3. A synthetic gas manufacturing method comprising steps of :
providing a synthetic gas manufacturing plant which comprises
(a) a reformer (10) having a reaction tube (11), a combustion radiation unit (12) arranged around the reaction tube (11) to heat the reaction tube (11), and a convection unit (13) communicating with the combustion radiation unit (12),
(b) a source gas supply passageway (20₂) to supply a natural gas to the reformer (10),
(c) a steam supply passageway (20₃) to supply steam to the source gas supply passage passageway (20₂),
(d) a carbon dioxide recovery apparatus (40) to which a total amount of combustion exhaust gas flowing through the convection unit (13) of the reformer (10) is supplied, and which recovers carbon dioxide from the combustion exhaust gas,
(e) a compressor (62) to compress the recovered carbon dioxide, and
(f) a return passageway (20₁₈) to supply part or the whole of the compressed carbon dioxide from the compressor (62) to the source gas supply passageway (20₂);
recovering, by the carbon dioxide recovery apparatus (40), carbon dioxide in the total amount of combustion exhaust gas which is exhausted from the combustion radiation unit (12) of the reformer (10), and flows in the convection unit (13);
compressing the carbon dioxide recovered by the carbon dioxide recovery apparatus (40) by the compressor (62); and
supplying part or the whole of the compressed carbon dioxide to the source gas supply passageway (20₂) through the return passageway (20₁₈), and supplying steam to the source gas supply passageway (20₂) through the steam supply passageway (20₃), thereby supplying a gas mixture of the natural gas, compressed carbon dioxide, and steam, as a source gas, to the reaction tube (11) externally heated by the combustion radiation unit (12) of the reformer (10);
**characterized in that** the method further comprises the step of providing a steam turbine powered by steam for driving the compressor, which is generated by exchanging heat between a synthetic gas synthesiwed by the reformer and water and/or by exchanging heat with water in the convection unit of the reformer

4. A method according to claim 3, **characterized in that** the total amount of combustion exhaust gas flowing in the convection unit is supplied to the carbon dioxide recovery apparatus by passageway area varying means placed in the convection unit.

5. A method according to claim 3, **characterized in that** a portion of the compressed carbon dioxide not used as a source gas is supplied into the ground and fixed therein.

6. A method according to any one of claims 3 to 5, **characterized in that** the manufactured synthetic gas is used in synthesis of methanol, synthesis of dimethylether, or synthesis of gasoline, kerosene, and light oil in a Fischer-Tropsch reaction system.

## Patentansprüche

1. Anlage zur Herstellung eines Synthesegases, umfassend:
einen Reformer (10) mit einem Reaktionsrohr (11), einer Verbrennungs- und Strahlungseinheit (12), die um das Reaktionsrohr (11) herum angeordnet ist, um das Reaktionsrohr (11) zu erwärmen, und einer Konvektionseinheit (13), die mit der Verbrennungs- und Strahlungseinheit (12) in Verbindung steht;
einen Ausgangsgaszufuhr-Durchgang (20₂) zum Zuführen eines Erdgases zum Reformer;
einen Dampfzufuhr-Durchgang (20₃) zum Zuführen von Dampf zum Ausgangsgaszufuhr-Durchgang (20₂);
eine Kohlendioxidrückgewinnungsvorrichtung (40), der eine gesamte Menge Verbrennungsabgas zugeführt wird, die durch die Konvektionseinheit (13) des Reformers (10) strömt, und in der Kohlendioxid aus dem Verbrennungsabgas zurück gewonnen wird;
einen Verdichter (62) zum Verdichten des zurück gewonnenen Kohlendioxids; und
einen Rückführdurchgang (20₁₈) zum Zuführen eines Teils des oder des gesamten verdichteten Kohlendioxids aus dem Verdichter (62) zum Ausgangsgaszufuhr-Durchgang (20₂),
**dadurch gekennzeichnet, dass** der Verdichter von einer Dampfturbine angetrieben wird, die mit Dampf betrieben wird, der von einem ersten Wärmetauscher, der Dampf durch Wärmeaustausch zwischen einem Synthesegas, das in dem Reformer synthetisiert wurde, und Wasser erzeugen kann, und/oder von einem zweiten Wärmetauscher, der Dampf durch Wärmeaustausch mit Wasser in der Konvektionseinheit des Reformers erzeugen kann, erzeugt wird.

2. Anlage nach Anspruch 1, **dadurch gekennzeichnet, dass** in der Konvektionseinheit ein Mittel zum Verändern der Durchgangsfläche angeordnet ist und der Kohlendioxidrückgewinnungsvorrichtung die gesamte Menge des Verbrennungsabgases zuführt, das in der Konvektionseinheit strömt.

3. Verfahren zur Herstellung von Synthesegas, das die folgenden Schritte umfasst:
Bereitstellen einer Anlage zur Herstellung von Synthesegas, die Folgendes umfasst
(a) einen Reformer (10) mit einem Reaktionsrohr (11), einer Verbrennungs- und Strahlungseinheit (12), die um das Reaktionsrohr (11) herum angeordnet ist, um das Reaktionsrohr (11) zu erwärmen, und einer Konvektionseinheit (13), die mit der Verbrennungs- und Strahlungseinheit (12) in Verbindung steht,
(b) einen Ausgangsgaszufuhr-Durchgang (20₂) zum Zuführen eines Erdgases zum Reformer (10),
(c) einen Dampfzufuhr-Durchgang (20₃) zum Zuführen von Dampf zum Ausgangsgaszufuhr-Durchgang (20₂),
(d) eine Kohlendioxidrückgewinnungsvorrichtung (40), der eine gesamte Menge Verbrennungsabgas zugeführt wird, die durch die Konvektionseinheit (13) des Reformers (10) strömt, und die Kohlendioxid aus dem Verbrennungsabgas zurück gewinnt,
(e) einen Verdichter (62) zum Verdichten des zurück gewonnenen Kohlendioxids und
(f) einen Rückführdurchgang (20₁₈) zum Zuführen eines Teils des oder des gesamten verdichteten Kohlendioxids aus dem Verdichter (62) zum Ausgangsgaszufuhr-Durchgang (20₂);
Rückgewinnen von Kohlendioxid in der gesamten Menge Verbrennungsabgas, die aus der Verbrennungs- und Strahlungseinheit (12) des Reformers (10) ausgestoßen wird und in der Konvektionseinheit strömt (13), durch die Kohlendioxidrückgewinnungsvorrichtung (40);
Verdichten des Kohlendioxids, das durch die Kohlendioxidrückgewinnungsvorrichtung (40) zurück gewonnen wurde, durch den Verdichter (62); und
Zuführen eines Teils des oder des gesamten verdichteten Kohlendioxids zum Ausgangsgaszufuhr-Durchgang (20₂) durch den Rückführdurchgang (20₁₈) und Zuführen von Dampf zum Ausgangsgaszufuhr-Durchgang (20₂) durch den Dampfzufuhr-Durchgang (20₃), **dadurch** Zuführen eines Gasgemischs aus dem Erdgas, verdichtetem Kohlendioxid und Dampf als Ausgangsgas zum Reaktionsrohr (11), das von außen durch die Verbrennungs- und Strahlungseinheit (12) des Reformers (10) erwärmt wird,
**dadurch gekennzeichnet, dass** das Verfahren ferner den Schritt des Bereitstellens einer Dampfturbine zum Antreiben des Verdichters umfasst, die mit Dampf betrieben wird, der durch Wärmeaustausch zwischen einem Synthesegas, das in dem Reformer synthetisiert wurde, und Wasser und/oder durch Wärmeaustausch mit Wasser in der Konvektionseinheit des Reformers erzeugt wird.

4. Verfahren nach Anspruch 3, **dadurch gekennzeichnet, dass** die gesamte Menge Verbrennungsabgas, die in der Konvektionseinheit strömt, der Kohlendioxidrückgewinnungsvorrichtung durch Mittel zum Verändern der Durchgangsfläche, die in der Konvektionseinheit angeordnet sind, zugeführt wird.

5. Verfahren nach Anspruch 3, **dadurch gekennzeichnet, dass** ein Anteil des verdichteten Kohlendioxids, der nicht als Ausgangsgas verwendet wird, in den Erdboden geleitet und darin gebunden wird.

6. Verfahren nach einem der Ansprüche 3 bis 5, **dadurch gekennzeichnet, dass** das hergestellte Synthesegas bei der Synthese von Methanol, der Synthese von Dimethylether oder der Synthese von Benzin, Kerosin und Leichtöl in einem Fischer-Tropsch-Reaktionssystem verwendet wird.

## Revendications

1. Usine de fabrication de gaz de synthèse comprenant :
un reformeur (10) comportant un tube de réaction (11), une unité de rayonnement de combustion (12) agencée autour du tube de réaction (11) pour chauffer le tube de réaction (11), et une unité de convection (13) communiquant avec l'unité de rayonnement de combustion (12) ;
un passage d'alimentation en gaz source (20₂) pour fournir un gaz naturel au reformeur ;
un passage d'alimentation en vapeur d'eau (20₃) pour fournir de la vapeur d'eau au passage d'alimentation en gaz source (20₂) ;
un appareil de récupération de dioxyde de carbone (40) auquel est fournie une quantité totale de gaz d'échappement de combustion s'écoulant à travers l'unité de convection (13) du reformeur (10), et qui récupère le dioxyde de carbone provenant des gaz d'échappement de combustion ;
un compresseur (62) pour comprimer le dioxyde de carbone récupéré ; et
un passage de retour (20₁₈) pour fournir une partie ou la totalité du dioxyde de carbone comprimé provenant du compresseur (62) au passage d'alimentation en gaz source (20₂),
**caractérisée en ce que** le compresseur est entraîné par une turbine à vapeur alimentée par de la vapeur d'eau, qui est générée par un premier échangeur de chaleur capable de générer de la vapeur d'eau en échangeant de la chaleur entre un gaz de synthèse synthétisé par le reformeur et de l'eau et/ou par un second échangeur de chaleur capable de générer de la vapeur d'eau en échangeant de la chaleur avec de l'eau dans l'unité de convection du reformeur.

2. Usine selon la revendication 1, **caractérisée en ce qu'**un moyen de variation de la zone de passage est placé dans l'unité de convection et fournit la quantité totale de gaz d'échappement de combustion circulant dans l'unité de convection à l'appareil de récupération de dioxyde de carbone.

3. Procédé de fabrication de gaz de synthèse comprenant les étapes consistant à :
fournir une usine de fabrication de gaz de synthèse qui comprend
(a) un reformeur (10) comportant un tube de réaction (11), une unité de rayonnement de combustion (12) agencée autour du tube de réaction (11) pour chauffer le tube de réaction (11), et une unité de convection (13) communiquant avec l'unité de rayonnement de combustion (12) ;
(b) un passage d'alimentation en gaz source (20₂) pour fournir un gaz naturel au reformeur (10);
(c) un passage d'alimentation en vapeur d'eau (20₃) pour fournir de la vapeur d'eau au passage d'alimentation en gaz source (20₂) ;
(d) un appareil de récupération de dioxyde de carbone (40) auquel est fournie une quantité totale de gaz d'échappement de combustion s'écoulant à travers l'unité de convection (13) du reformeur (10), et qui récupère le dioxyde de carbone provenant des gaz d'échappement de combustion ;
(e) un compresseur (62) pour comprimer le dioxyde de carbone récupéré ; et
(f) un passage de retour (20₁₈) pour fournir une partie ou la totalité du dioxyde de carbone comprimé provenant du compresseur (62) au passage d'alimentation en gaz source (20₂) ;
récupérer par l'appareil de récupération de dioxyde de carbone (40) le dioxyde de carbone dans la quantité totale des gaz d'échappement de combustion qui s'échappent de l'unité de rayonnement de combustion (12) du reformeur (10) et s'écoule dans l'unité de convection (13) ;
comprimer le dioxyde de carbone récupéré par l'appareil de récupération de dioxyde de carbone (40) par le compresseur (62) ; et
fournir une partie ou la totalité du dioxyde de carbone comprimé au passage d'alimentation en gaz source (20₂) par le passage de retour (20₁₈), et fournir de la vapeur d'eau au passage d'alimentation en gaz source (20₂) par le passage d'alimentation en vapeur d'eau (20₃), fournissant ainsi un mélange gazeux du gaz naturel, du dioxyde de carbone comprimé et de la vapeur d'eau, en tant que gaz source, au tube de réaction (11) chauffé de manière externe par l'unité de rayonnement de combustion (12) du reformeur (10) ;
**caractérisé en ce que** le procédé comprend en outre l'étape consistant à fournir une turbine à vapeur alimentée par de la vapeur d'eau destinée à entraîner le compresseur, qui est généré par échange de chaleur entre un gaz de synthèse synthétisé par le reformeur et de l'eau et/ou par échange de chaleur avec de l'eau dans l'unité de convection du reformeur.

4. Procédé selon la revendication 3, **caractérisé en ce que** la quantité totale de gaz d'échappement de combustion s'écoulant dans l'unité de convection est fournie à l'appareil de récupération de dioxyde de carbone par le moyen de variation de la zone de passage placé dans l'unité de convection.

5. Procédé selon la revendication 3, **caractérisé en ce qu'**une portion du dioxyde de carbone comprimé non utilisée en tant que gaz source est fournie dans la terre et y est fixée.

6. Procédé selon l'une quelconque des revendications 3 à 5, **caractérisé en ce que** le gaz de synthèse fabriqué est utilisé dans la synthèse du méthanol, la synthèse du diméthyl éther ou la synthèse d'essence, de kérosène et d'huile légère dans un système de réaction de Fisher-Tropsch.
